# EUROPÄISCHE PATENTSCHRIFT

(11) **EP 1 258 438 B1**
(45) Veröffentlichungstag und Bekanntmachung des Hinweises auf die Patenterteilung: **12.04.2006**
(21) Anmeldenummer: 02009848.9
(22) Anmeldetag: 02.05.2002
(51) Int. Cl.: B65G 1/137

(54) **Lagerregal**
Storage rack
Rayonnage de stockage

(30) Priorität: 18.05.2001 DE 20108392 U
(43) Veröffentlichungstag der Anmeldung: 20.11.2002
(73) Patentinhaber: GEBR. WILLACH GmbH, D-53809 Ruppichteroth (DE)
(72) Erfinder: Willach, Ulrich, 53819 Neunkirchen-Seelscheid (DE); Schmitt, Werner, 53809 Ruppichteroth-Schönenberg (DE)
(74) Vertreter: Selting, Günther

(56) Entgegenhaltungen:
- DE-A- 4 302 711
- DE-A- 19 620 569
- US-A- 5 536 916
- US-A- 6 003 771

## Beschreibung

Die Erfindung betrifft ein Lagerregal mit einer Anordnung aus mehreren Lagerstellen, die im Wesentlichen in einer Ebene liegende Endbereiche aufweisen, und insbesondere ein Lagerregal, das imstande ist, zahlreiche Gegenstände gleicher Art jeweils an einer bestimmten Lagerstelle bereitzuhalten, wie dies beispielsweise bei Apothekenregalen der Fall ist.

In EP 0 991 036 A2 ist ein Lagerregal beschrieben, bei dem die Lagerstellen auf Schrägfachböden angeordnet sind. Zwischen den vorderen Enden der Schrägfachböden und einer Tür befindet sich ein Freiraum, in dem ein Manipulator bewegbar ist. Der Manipulator kann gesteuert einzelne Positionen der Schrägfachböden ansteuern und dann die vordere Ware durch Anheben entnehmen. Der Manipulator fährt dann mit der entnommenen Ware zu einer Ausgabeöffnung, aus der die Ware herausfällt. Das Befüllen eines solchen Lagerregals erfolgt entweder von der Entnahmeseite her, die als Frontseite bezeichnet werden kann, oder von der gegenüberliegenden Rückseite. Das Befüllen des Lagerregals, d.h. das Einbringen von Waren in die Lagerstellen, erfordert ein hohes Maß an Konzentration, weil jede Ware einer bestimmten Lagerstelle zugeordnet ist. In einem Computer sind die Lagerstellen zusammen mit Angaben über die betreffenden Waren gespeichert. Würde eine Ware falsch in das Lagerregal eingelegt werden, würde sie anstelle einer anderen Ware von der automatischen Ausgabevorrichtung herausgegeben werden. Dies kann zu Konfusion führen und im Falle von Apothekenregalen sogar zu einer erheblichen Gefährdung der Patienten, wenn nämlich falsche Medikamente ausgegeben werden.

Es ist üblich, bei Lagerregalen einen Computer vorzusehen, der die einzelnen Waren bestimmten Lagerstellen zuordnet. Üblicherweise steuert der Computer einen Ausgabeautomaten, der die Waren den Lagerstellen entnimmt. Das Befüllen der Lagerstellen erfolgt jedoch manuell, wobei Fehler vorkommen können.

In DE 43 02711 A1 ist ein Lagerregal mit den Merkmalen des Oberbegriffs des Patentanspruchs 1 beschrieben. Dieses Lagerregal besteht aus einem Paternosterschrank, bei dem die Gefachreihen an endlos umlaufenden Ketten befestigt sind und jede Gefachreihe in die Höhe eines Arbeitsplatzes gefahren werden kann. Über dem Arbeitsplatz ist vor der Regalfront hinter einer Blende eine Lichtquelle mit Ablenkvorrichtung angeordnet, um einen gebündelten Lichtstrahl auf ein ausgewähltes Fach derjenigen Gefachreihe zu richten, aus der ein Gegenstand entnommen werden soll. Dabei ist die Höhe, in der die Fächer durch den Lichtstrahl markiert werden sollen, durch die Arbeitsplatzhöhe vorgegeben. Der Lichtstrahl muss nur solche Fächer bzw. Unterabteilungen von Fächern markieren, die sich auf dieser Höhe befinden.

In DE 196 20 569 A1 ist ein Lagerregal beschrieben, dem ein optisches Zeigersystem zugeordnet ist, um einzelne Regalbehälter zu kennzeichnen. Das optische Zeigersystem besteht aus einem Laser, der in einem Gang zwischen zwei Regalen an der Ecke angeordnet ist und einen Lichtstrahl gezielt auf einzelne Reflektoren aussenden kann, die an einer Leiste des Regals angeordnet sind. Das optische Zeigersystem erfordert eine spezielle Anpassung an den jeweiligen Aufstellungsort des Regals.

Der Erfindung liegt die Aufgabe zugrunde, ein Lagerregal mit Lichtstrahl-Anzeigevorrichtung zu schaffen, bei welchem die an der Frontseite sichtbaren Lagerstellen an ihrem jeweiligen Ort mit einem Lichtzeiger markiert werden können, wobei der Lichtzeiger in das Lagerregal integriert ist.

Die Lösung dieser Aufgabe erfolgt mit den im Patentanspruch 1 angegebenen Merkmalen. Hiernach trifft der Lichtstrahl aus Richtung der Lagerstellenanordnung auf die vor der Regalfront angeordnete Ablenkvorrichtung. Die Ablenkvorrichtung weist einen Kippspiegel auf, der von einer gesteuerten Antriebsvorrichtung derart bewegbar ist, dass er den Lichtstrahl auf die Höhe der ausgewählten Lagerstelle lenkt, wobei die Lagerstellen in dem Lagerregal in unterschiedlichen Höhen durch den Lichtstrahl erreichbar sind und die Ablenkvorrichtung den Lichtpunkt in einer vertikalen Ebene derart bewegt, dass dieser jeweils eine der in dieser Ebene angeordneten Lagerstellen markiert.

Die Erfindung schafft ein Regallager mit nichtzirkulierenden Lagerstellen, bei welchem eine Lichtpunktmarkierung sämtlicher Lagerstellen an ihrem jeweiligen Ort erfolgen kann, wobei Lichtquelle und Ablenkvorrichtung in räumlicher Nähe zur Lagerstellenanordnung platziert werden können. Der von der Lichtquelle ausgehende Lichtstrahl trifft aus der Richtung der Lagerstellenanordnung auf einen Kippspiegel, der die Höhensteuerung des Lichtpunktes bewirkt.

Der Lichtpunkt kennzeichnet diejenige Lagerstelle, an der eine bestimmte Ware abgelegt werden soll. Die Steuerung der Ablenkvorrichtung erfolgt automatisch, beispielsweise in Abhängigkeit von einem Barcode, der auf der betreffenden Ware angebracht ist und mit einem Lesegerät gelesen wird. Ein Computer ordnet den Inhalt des Barcodes einem bestimmten Produkt und dieses wiederum einer bestimmten Lagerstelle im Lagerregal zu.

Die Erfindung ist generell bei allen Lagerregalen anwendbar, bei denen die Lagerstellen jeweils eine Fläche haben, die für die Projektion eines Lichtpunktes durch einen von außen einfallenden Lichtstrahl zugänglich ist. Sie eignet sich für Regale, die einzelne Fachböden aufweisen, wobei der Lichtstrahl entweder gegen die Stirnseite oder auf einen stirnseitennahen Bereich des Fachbodens gerichtet werden kann. Hierzu gehören Schrägfachbodenregale sowie auch Regale mit horizontalen Fachböden. Im Rahmen der Erfindung werden auch Schubladenschränke als Lagerregale betrachtet. Hierbei kann der Lichtpunkt auf die Frontseiten der Schubladen gerichtet werden, um die jeweils herauszuziehende Schublade zu bezeichnen. Außerdem kann innerhalb der Schublade noch ein Streifen bezeichnet werden, in dem das betreffende Produkt abgelegt werden soll.

Die Ablenkvorrichtung ist vorzugsweise an einem Schrankgehäuse befestigt, das die Lagerstellenanordnung enthält. Sie kann an jeder der Kanten des Schrankgehäuses angeordnet sein, beispielsweise entlang der vertikalen Kanten. Vorzugsweise ist sie entlang der Oberkante angeordnet. Dies hat den Vorteil, dass der stark gebündelte Lichtstrahl, vorzugsweise ein Laserstrahl, von oben nach unten gerichtet ist, so dass die Möglichkeit, dass eine Person in den Lichtstrahl blickt praktisch ausgeschlossen ist.

Die Ablenkvorrichtung kann einen entlang der Lagerstellenanordnung gesteuert linear bewegbaren Spiegel aufweisen, dessen Bewegungsweg im Strahlengang der feststehenden Lichtquelle verläuft. Der Lichtstrahl, vorzugsweise ein Laserstrahl, wird also von dem Spiegel, der beispielsweise auf die X-Koordinate der ausgewählten Lagerstelle gefahren wurde, reflektiert und dann von dem Kippspiegel abgelenkt, wobei der Kippwinkel des Kippspiegels die Y-Koordinate des Lichtpunkts bestimmt. Auf diese Weise wird durch die beiden Spiegel der Lichtpunkt in einem zweidimensionalen Koordinatensystem gesteuert erzeugt.

Alternativ hierzu kann ein entlang der X-Koordinate gesteuert bewegbarer Laser als Lichtquelle vorgesehen sein, wobei der Laserstrahl in jeder Stellung, die der Laser entlang seiner linearen Bewegungsbahn einnimmt, auf den Kippspiegel gerichtet wird, der sich parallel zu dieser Bewegungsbahn erstreckt.

Die Ablenkvorrichtung ist vorzugsweise in einem separaten Aufsatz eines Schrankgehäuses enthalten. Dies ermöglicht eine Hachrüstung bestehender Lagerregale mit der Anzeigevorrichtung.

Die Erfindung ist vorzugsweise anwendbar bei einem Lagerregal mit automatischer Entnahme, wie es in EP 0 991 036 A2 beschrieben ist. Hierbei ist vor der Lagerstellenanordnung ein einen Manipulator enthaltender Freiraum vorgesehen. Dieser kann durch eine Glastür verschlossen sein. Die Ablenkvorrichtung ist vor der Glastür angeordnet und lenkt den Lichtstrahl sogar bei geschlossener Tür durch diese hindurch auf die Lagerstellenanordnung. Eine solche Anzeigevorrichtung, die auf der Frontseite des Lagerregals angeordnet ist, eignet sich für Lagerregale, die von der Frontseite her beschickt werden. Bei Lagerregalen, die von der Rückseite her beschickt werden, ist die Anzeigevorrichtung auf der Rückseite, also der Entnahmeseite abgewandt, angeordnet.

Im folgenden werden unter Bezugnahme auf die Zeichnungen Ausführungsbeispiele der Erfindung näher erläutert.

Es zeigen:
- Fig. 1: einen schematischen Querschnitt durch eine erste Ausführungsform eines Lagerregals mit Lichtpunkt-Anzeigevorrichtung zur Kennzeichnung einzelner Lagerstellen,
- Fig. 2: eine Frontansicht des Lagerregals nach Fig. 1,
- Fig. 3: eine schematisierte perspektivische Darstellung der Anzeigevorrichtung,
- Fig. 4: eine vergrößerte. Darstellung der Einzelheit IV aus Fig. 1,
- Fig. 5: einen schematischen Querschnitt durch ein Lagerregal mit rückseitig angeordneter Anzeigevorrichtung, und
- Fig. 6: eine Darstellung eines Lagerregals, das als Schubladenschrank ausgebildet ist.

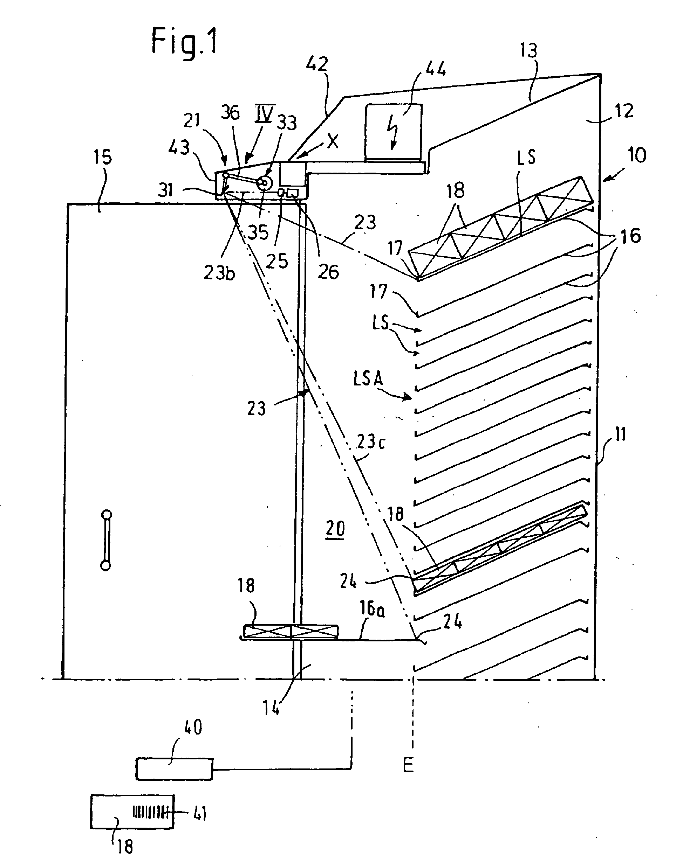

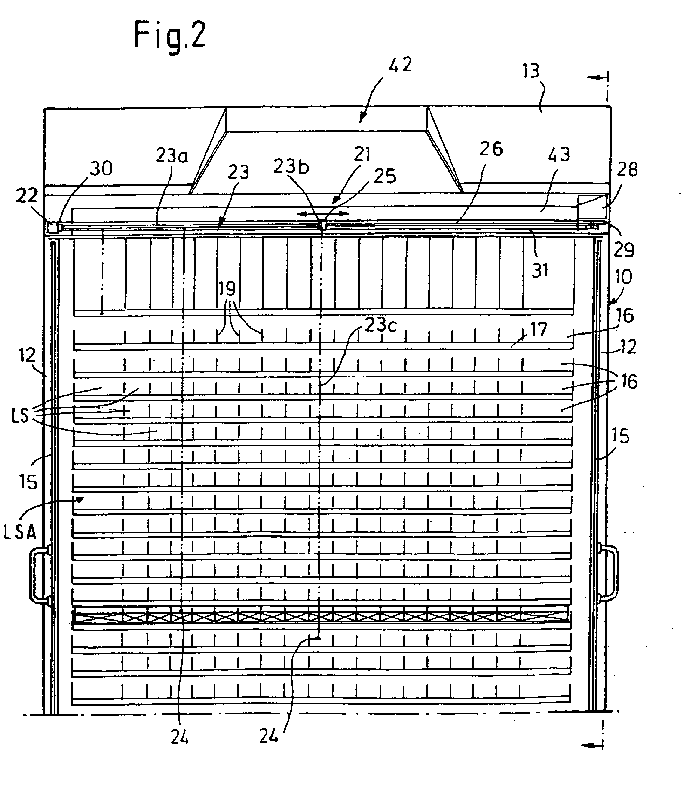

Das Lagerregal gemäß der ersten Ausführungsform nach den Figuren 1 bis 4 weist ein Schrankgehäuse 10 auf mit einer geschlossenen Rückwand 11 und parallelen Seitenwänden 12 sowie einer Dachwand 13. An der Vorderseite 14 befinden sich Türen 15, die in den Zeichnungen im aufgeklappten Zustand dargestellt sind. Diese Türen sind durchsichtig. Sie bestehen aus Glas.

Das Lagerregal enthält zahlreiche übereinander angeordnete Schrägfachböden 16, die jeweils an ihrem vorderen Ende einen Anschlag 17 aufweisen. Die zu lagernden Gegenstände 18 liegen auf einem Schrägfachboden und werden durch Schwerkraft gegen den Anschlag 17 gedrückt. Die Anschläge 17 kennzeichnen die Entnahmeseite.

Jeder Schrägfachboden 16 enthält Teiler 19, die die einzelnen Lagerstellen LS auf diesem Schrägfachboden begrenzen. Jede Lagerstelle LS besteht also aus einem langgestreckten Kanal, der durch Teiler 19 abgegrenzt ist. Auf diese Weise werden auf jedem Schrägfachboden 16 zahlreiche Lagerstellen LS gebildet. Jede Lagerstelle LS ist für mehrere gleiche Gegenstände 18 bestimmt. Die Lagerstellen LS sind individuell bezeichnet. Ein Computer enthält eine Tabelle, in der die einzelnen Waren 18 jeweils bestimmten Lagerstellen LS zugeordnet sind.

Die zahlreichen auf Schrägfachböden verteilten Lagerstellen LS bilden eine Lagerstellenanordnung LSA. Die vorderen Enden der Lagerstellen LS befinden sich in einer gemeinsamen vertikalen Ebene E (Fig. 1).

Bei dem vorliegenden Ausführungsbeispiel befindet sich vor der Ebene E im Schrankgehäuse 10 ein Freiraum 20, in dem ein (nicht dargestellter) Manipulator verfahrbar ist, um jeweils den vorderen Gegenstand 18 einer Lagerstelle unter Steuerung durch den Computer anzuheben und ihn dadurch aus der Lagerstelle zu entnehmen, so wie dies in EP 0 991 036 A2 beschrieben ist. Der Manipulator transportiert dann den entnommenen Gegenstand 18 zu einer Ausgabestelle.

Bei dem vorliegenden Ausführungsbeispiel bildet die Vorderseite der Lagerstellenanordnung LSA nicht nur die Entnahmeseite, sondern auch die Beschickungsseite. Zur Beschickung, d.h. zum Einfüllen von Waren, können die Schrägfachböden 16, die auf Auszügen laufen, einzeln nach vorne herausgezogen werden. Dann können manuell Gegenstände 18 auf den Lagerstellen LS abgelegt werden.

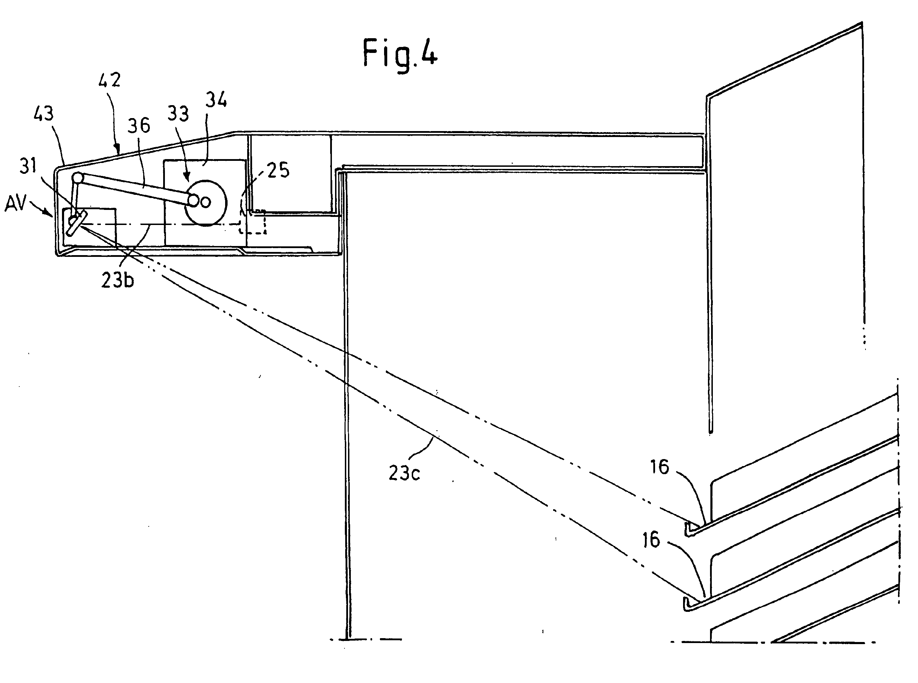

Zur Erleichterung der Beschickung des Lagerregals ist eine optische Anzeigevorrichtung 21 vorgesehen. Diese weist eine Lichtquelle 22 zur Erzeugung eines gebündelten Lichtstrahls 23 auf sowie eine Ablenkvorrichtung AV (Fig. 4), die den Lichtstrahl 23 gesteuert auf eine Lagerstelle LS richtet und dort einen Lichtpunkt 24 erzeugt.

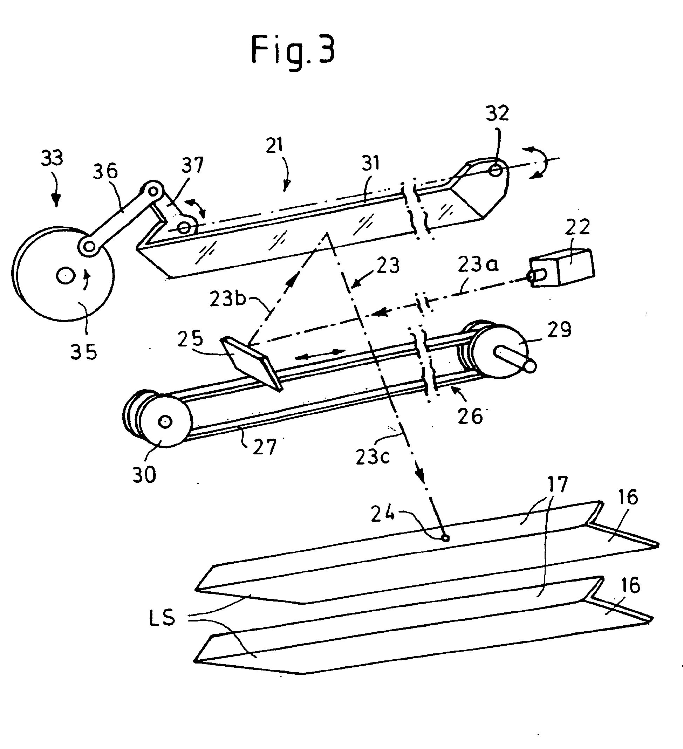

Die Ablenkvorrichtung AV enthält einen Spiegel 25, der von einem Linearantrieb 26 über die gesamte Breite des Lagerregals horizontal verfahrbar ist. Der Linearantrieb 26 weist hier einen Zahnriementrieb 27 (Fig. 3) auf, an dessen einem Trum der Spiegel 25 befestigt ist. Der Zahnriemen läuft über eine von einem Schrittmotor 28 angetriebene Zahnriemenscheibe 29 und eine Umlenkscheibe 30. Somit kann der Spiegel 25 in jede beliebige Position über die Breite des Lagerregals eingestellt werden.

Der Spiegel 25 lenkt den von der Lichtquelle parallel zum Linearantrieb 26 ausgesandten Strahlenteil 23a rechtwinklig in derselben horizontalen Ebene ab, so dass ein nach vorne gerichteter Strahlenteil 23b (Fig. 3) entsteht, der auf einen Kippspiegel 31 gerichtet ist. Der Kippspiegel 31 verläuft parallel zum Linearantrieb 26 und er ist diesem vorgelagert. Der Kippspiegel 31 erstreckt sich über die gesamte Breite der Lagerstellenanordnung LSA und er ist um eine Längsachse 32 schwenkbar. Das Schwenken des Kippspiegels 31 erfolgt über eine Kurbelschwinge 33. Eine von einem Schrittmotor 34 angetriebene Scheibe 35 bewegt einen Kurbelarm 36, welcher gelenkig an einem mit dem Kippspiegel 31 verbundenen Lenker 37 angreift. Durch gesteuertes Drehen der Scheibe 35 kann die Neigung des Kippspiegels 31 um die Schwenkachse 32 herum in sehr feinen Schritten verändert werden.

Der Lichtstrahl 23 trifft nach Reflexion durch den Spiegel 25 auf den Kippspiegel 31. Von diesem wird er schräg nach unten abgelenkt, so dass der Teil 23c des Lichtstrahls 23 entsteht, welcher auf der Lagerstelle LS den Lichtpunkt 24 erzeugt. Befindet sich auf der Lagerstelle LS bereits ein Gegenstand 18, so wird der Lichtpunkt natürlich auf dem Gegenstand erzeugt.

Die Steuerung der Linearbewegung des Spiegels 25 und der Kippbewegung des Kippspiegels 31 erfolgt durch einen Computer in Abhängigkeit von den Koordinaten der ausgewählten Lagerstelle. Hierzu tastet der Benutzer mit einem Barcodeleser 40 einen Barcode 41, der auf dem Gegenstand 18 angebracht ist ab, um den Gegenstand zu identifizieren. Dann wird diesem Gegenstand eine Lagerstelle LS zugeordnet. Diese wird durch den Lichtpunkt 24 angezeigt. Der Benutzer kann dann den betreffenden Schrägfachboden 16a herausziehen, so wie dies in Fig. 1 dargestellt ist und Gegenstände 18 darauf ablegen. Die Auszugsvorrichtung ist so ausgebildet, dass der Schrägfachboden 16a beim Herausziehen horizontal eingestellt wird. Dann kann der Schrägfachboden 16a wieder eingeschoben werden.

Das Beschicken des Lagerregals erfolgt durch die geöffneten Türen 15 hindurch. Da die Türen aus Glas bestehen, ist eine Anzeige der Lagerstellen auch durch die geschlossenen Türen möglich.

Die Anzeigevorrichtung 21 mit der Ablenkvorrichtung AV sind in einem separaten Aufsatz 42 enthalten, der auf dem Schrankgehäuse 10 befestigt ist. Der Aufsatz 42 enthält einen Ausleger 43, der die Türebene nach vorne überragt und die Ablenkvorrichtung AV mit den Spiegeln 25 und 31 enthält. Dieser Ausleger 43 ist an seiner Unterseite offen, so dass der Lichtstrahl 23 ungehindert austreten kann. Der Aufsatz 42 enthält ferner einen Steuerteil 44 mit den erforderlichen Steuerungs- und Stromversorgungskomponenten.

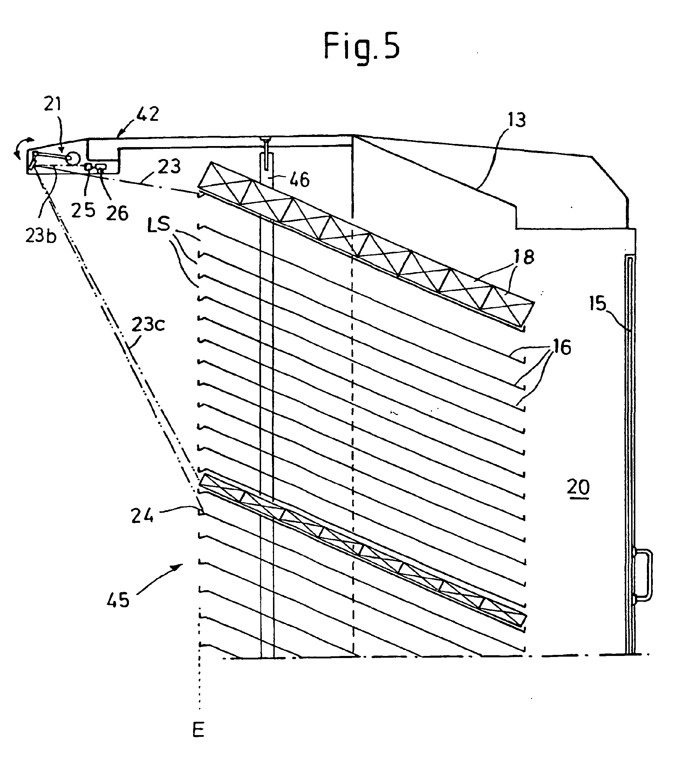

Bei dem Ausführungsbeispiel nach Fig. 5 handelt es sich um ein Lagerregal, das von der Rückseite 45 her beschickt wird. Daher ist die Rückseite offen oder mit einer Tür versehen. Der Aufsatz 42 ist auf einer Säule 46 montiert. Die Anzeigevorrichtung 21, die in dem Aufsatz 42 enthalten ist, erzeugt einen Lichtpunkt 24, in den nahe der vertikalen Ebene E liegenden rückwärtigen Endbereichen der Schrägfachböden. Die Schrägfachböden 16 können im vorliegenden Fall feststehend sein. Der Bediener führt die Gegenstände 18 an derjenigen Lagerstelle LS ein, die durch den Lichtpunkt 24 bezeichnet wird. Der Gegenstand gleitet dann in der betreffenden Lagerstelle bis zum Anschlag herunter.

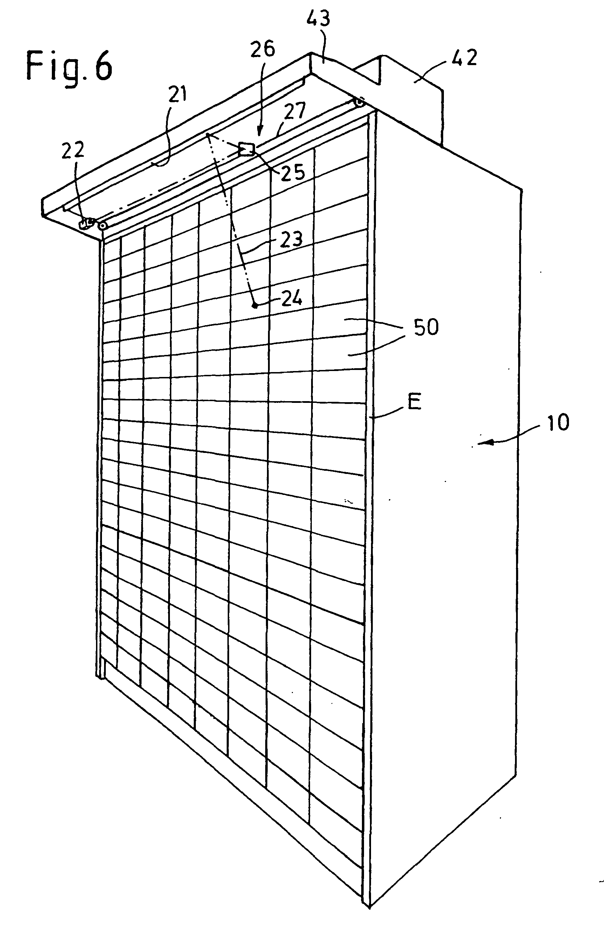

Fig. 6 zeigt ein Ausführungsbeispiel eines Schubladenschranks mit einem Schrankgehäuse 10, das zahlreiche in Auszügen laufende Schubläden enthält, die jeweils eine Frontplatte 50 aufweisen. In den Schubladen befinden sich die Lagerstellen. Auf dem Schrankgehäuse 10 befindet sich ein Aufsatz 42 mit einem vorspringenden Ausleger 43, der die Anzeigevorrichtung 21 mit dem Spiegel 25, dem Linearantrieb 26 und dem Kippspiegel 31 enthält. Der Lichtstrahl 23 wird auf die Frontplatte 50 einer Schublade gelenkt und er erzeugt dort einen Lichtpunkt 24, der die Schublade bezeichnet, in der ein Gegenstand abgelegt werden soll. Er kann auch beispielsweise den linken, rechten oder mittleren Schubladenbereich bezeichnen, für den der Gegenstand bestimmt ist. Wenn die Schublade herausgezogen ist, befindet sich der Lichtpunkt 24 auf dem Schubladenboden, so dass er dort den jeweiligen Schubladenbereich kennzeichnet.

Die Koordinatensteuerung für den Lichtpunkt ist so ausgelegt, dass die Nichtlinearität berücksichtigt wird, die dadurch entsteht, dass der Teil 23c des Lichtstrahls 23 unter einem spitzen Winkel auf die Anzeigeebene E fällt. Entsprechende Umrechnungsmethoden sind Fachleuten geläufig.

Die Erfindung erleichtert das Aufsuchen von Lagerstellen und das Ablegen bestimmter Gegenstände an dafür vorgesehenen Lagerstellen und verringert die Fehler. Sie ermöglicht die Automatisierung in dem Maße, dass die Bedienungsperson die Gegenstände lediglich in den automatisch angezeigten Lagerstellen deponieren muss, ohne dass eine gedankliche Tätigkeit durchgeführt werden muss. Der Bediener muss nicht einmal den Gegenstand identifizieren, bzw. die Verpackung lesen.

Die erfindungsgemäße Lichtpunktanzeige erleichtert nicht nur das Einräumen von Gegenständen in das Lagerregal. Sie kann auch benutzt werden, um für das Entnehmen von Gegenständen die betreffende Lagerstelle anzuzeigen.

## Patentansprüche

1. Lagerregal mit einer Lagerstellenanordnung (LSA) aus mehreren Lagerstellen (LS) und mit einer Anzeigevorrichtung (21) zum Anzeigen einzelner Lagerstellen (LS) in Abhängigkeit von Befehlen einer Steuervorrichtung, wobei die Anzeigevorrichtung (21) aufweist:
eine Lichtquelle (22) zur Erzeugung eines gebündelten Lichtstrahles und eine vor der Regalfront angeordnete Ablenkvorrichtung (AV), die einen Kippspiegel (31) aufweist, der von einer gesteuerten Antriebsvorrichtung (33) bewegbar ist und den Lichtstrahl (23) auf eine ausgewählte Lagerstelle (LS) lenkt und dort einen Lichtpunkt (24) erzeugt,
**dadurch gekennzeichnet,**
**dass** der Lichtstrahl aus Richtung der Lagerstellenanordnung (LSA) auf die Ablenkvorrichtung (AV) trifft und dass die Ablenkvorrichtung den Lichtstrahl auf die Höhe der ausgewählten Lagerstelle (LS) lenkt, wobei die Lagerstellen (LS) in dem Lagerregal in unterschiedlichen Höhen durch den Lichtstrahl erreichbar sind und die Ablenkvorrichtung (AV) den Lichtpunkt (24) in einer vertikalen Ebene derart bewegt, dass dieser jeweils eine der in dieser Ebene angeordneten Lagerstellen markiert.

2. Lagerregal nach Anspruch 1, **dadurch gekennzeichnet, dass** die Lagerstellen (LS) im Wesentlichen in einer Ebene (E) liegende Endbereiche aufweisen und dass die Ablenkvorrichtung (AV) an einem Rand der Lagerstellenanordnung (LSA) über die Ebene (E) vorstehend angeordnet ist und an einem die Lagerstellen (LS) enthaltenden Schrankgehäuse (10) befestigt ist.

3. Lagerregal nach Anspruch 2, **dadurch gekennzeichnet, dass** die Lichtquelle (22) und die Ablenkvorrichtung (AV) am oberen Ende des Schrankgehäuses (10) angeordnet sind.

4. Lagerregal nach einem der Ansprüche 1-3, **dadurch gekennzeichnet, dass** die Ablenkvorrichtung (AV) einen entlang der Lagerstellenanordnung (LSA) gesteuert linear bewegbaren Spiegel (25) aufweist, dessen Bewegungsweg im Strahlengang der feststehenden Lichtquelle (22) verläuft.

5. Lagerregal nach einem der Ansprüche 1-4, **dadurch gekennzeichnet, dass** die Lichtquelle (22) entlang der Lagerstellenanordnung (LSA) gesteuert linear bewegbar ist und ihr gebündelter Lichtstrahl auf den Kippspiegel (31) gerichtet ist.

6. Lagerregal nach einem der Ansprüche 1-5, **dadurch gekennzeichnet, dass** der Kippspiegel (31) sich über die gesamte Breite der Lagerstellenanordnung (LSA) erstreckt.

7. Lagerregal nach Anspruch 2, **dadurch gekennzeichnet, dass** die Ablenkvorrichtung in einem separaten Aufsatz (42) des Schrankgehäuses (10) enthalten ist.

8. Lagerregal nach einem der Ansprüche 1-7, **dadurch gekennzeichnet, dass** es als Schrägfachbodenregal ausgebildet ist.

9. Lagerregal nach einem der Ansprüche 1-8, **dadurch gekennzeichnet, dass** es vor der Lagerstellenanordnung (LSA) einen einen Manipulator enthaltenden Freiraum (20) aufweist, der durch eine Glastür (15) verschlossen ist.

10. Lagerregal nach einem der Ansprüche 1-7, **dadurch gekennzeichnet, dass** mindestens einige Lagerstellen (LS) Schubladen sind, auf deren Frontseiten (50) der Lichtstrahl (23) gelenkt wird.

## Claims

1. A storage rack comprising a storage place array (LSA) of a plurality of storage places (LS) and comprising an indicating device (21) for indicating individual storage places (LS) depending on instructions from a control device, the indicating device (21) comprising:
a light source (22) for generating a bundled light beam and a deflecting device (AV) arranged in front of the storage rack front and comprising a tilting mirror (31) adapted to be moved by a controlled drive device (33) and directing the light beam (23) onto a selected storage place (LS), where it creates a light spot (24),
**characterized in**
**that** the light beam impinges on the deflecting device (AV) from the direction of the storage place array (LSA) and that the deflecting device directs the light beam to the level of the storage place (LS) selected, the storage places (LS) in the storage rack being reachable for the light beam on different levels and the deflecting device (AV) moves the light spot (24) in a vertical plane such that it marks a respective one of the storage places in this plane.

2. The storage rack of claim 1, **characterized in that** the storage places (LS) have end portions substantially lying in one plane (E) and that the deflecting device (AV) is arranged at an edge of the storage place array (LSA) so as to project beyond the plane (E) and is fastened to a cabinet housing (10) accommodating the storage places (LS).

3. The storage rack of claim 2, **characterized in that** the light source (22) and the deflecting device (AV) are arranged at the upper end of the cabinet housing (10).

4. The storage rack of one of claims 1-3, **characterized in that** the deflecting device (AV) comprises a mirror (25) that is linearly movable under control along the storage place array (LSA), the path of motion of the mirror extending along the beam path of the stationary light source (22).

5. The storage rack of one of claims 1-4, **characterized in that** the light source (22) is linearly movable under control along the storage place array (LSA) and its bundled light beam is directed onto the tilting mirror (31).

6. The storage rack of one of claims 1-5, **characterized in that** the tilting mirror (31) extends over the entire width of the storage place array (LSA).

7. The storage rack of claim 2, **characterized in that** the deflecting device is contained in a separate attachment (42) of the cabinet housing (10).

8. The storage rack of one of claims 1-7, **characterized in that** it is configured as in inclined-tray rack.

9. The storage rack of one of claims 1-8, **characterized in that** it has a free space (20) in front of the storage place array (LSA), which accommodates a manipulator and is closed with a glass door (15).

10. The storage rack of one of claims 1-7, **characterized in that** at least some storage places (LS) are drawers onto whose front sides (50) the light beam (23) is directed.

## Revendications

1. Rayonnage de stockage comprenant un dispositif de rangées de stockage (LSA) avec plusieurs rangées de stockage (LS) et un dispositif de marquage (21) pour marquer différentes rangées de stockage (LS) en fonction d'instructions d'un dispositif de commande, le dispositif de marquage (21) présentant :
une source de lumière (22) pour générer un faisceau de lumière et un dispositif de déviation (AV) disposé devant le front de rayonnage et comprenant un miroir basculant (31) qui est déplaçable par un dispositif d'entraînement (33) commandé, dirige le faisceau de lumière (23) sur une rangée de stockage (LS) choisie et y génère un point de lumière (24),
**caractérisé en ce que**
le faisceau lumineux tombe de la direction du dispositif de rangées de stockage (LSA) sur le dispositif de déviation (AV), et le dispositif de déviation dirige le faisceau de lumière sur la hauteur de la rangée de stockage (LS) choisie, les rangées de stockage (LS) dans le rayonnage de stockage pouvant être atteintes par le faisceau de lumière à différentes hauteurs et le dispositif de déviation (AV) déplaçant le point de lumière (24) dans un plan vertical de sorte que celui-ci marque respectivement l'une des rangées de stockage situées dans ce plan.

2. Rayonnage de stockage selon la revendication 1, **caractérisé en ce que** les rangées de stockage (LS) présentent des zones extrêmes situées pour l'essentiel dans un plan (E), et le dispositif de déviation (AV) est disposé sur un bord du dispositif de rangées de stockage (LSA) de manière à dépasser du plan (E) et fixé à un boîtier d'armoire (10) contenant les rangées de stockage (LS) .

3. Rayonnage de stockage selon la revendication 2, **caractérisé en ce que** la source de lumière (22) et le dispositif de déviation (AV) sont disposés sur l'extrémité supérieure du boîtier d'armoire (10).

4. Rayonnage de stockage selon l'une quelconque des revendications 1 à 3, **caractérisé en ce que** le dispositif de déviation (AV) présente un miroir (25) en déplacement linéaire commandé le long du dispositif de rangées de stockage (LSA), dont le trajet de déplacement se situe dans la trajectoire du faisceau de la source de lumière fixe (22).

5. Rayonnage de stockage selon l'une quelconque des revendications 1 à 4, **caractérisé en ce que** la source de lumière (22) est déplaçable de manière commandée linéairement le long du dispositif de rangées de stockage (LSA), et son faisceau de lumière est dirigé sur le miroir basculant (31).

6. Rayonnage de stockage selon l'une quelconque des revendications 1 à 5, **caractérisé en ce que** le miroir basculant (31) s'étend sur toute la largeur du dispositif de rangées de stockage (LSA).

7. Rayonnage de stockage selon la revendication 2, **caractérisé en ce que** le dispositif de déviation est contenu dans un chapeau (42) séparé du boîtier d'armoire (10).

8. Rayonnage de stockage selon l'une quelconque des revendications 1 à 7, **caractérisé en ce qu'**il présente la forme d'un rayonnage à tablettes inclinées.

9. Rayonnage de stockage selon l'une quelconque des revendications 1 à 8, **caractérisé en ce qu'**il présente un espace libre (20) situé devant le dispositif de rangées de stockage (LSA), qui contient un manipulateur et est fermé par une porte vitrée (15).

10. Rayonnage de stockage selon l'une quelconque des revendications 1 à 7, **caractérisé en ce qu'**au moins quelques rangées de stockage (LS) sont des tiroirs sur les faces frontales (50) desquels est dirigé le faisceau de lumière (23).
